# EUROPÄISCHE PATENTSCHRIFT

(11) **EP 1 554 479 B1**
(45) Veröffentlichungstag und Bekanntmachung des Hinweises auf die Patenterteilung: **21.06.2006**
(21) Anmeldenummer: 03773528.9
(22) Anmeldetag: 10.10.2003
(51) Int. Cl.: F02D 41/22

(54) **VERFAHREN UND VORRICHTUNG ZUR DREHRICHTUNGSÜBERWACHUNG EINER KOLBENMASCHINE**
METHOD AND DEVICE FOR MONITORING THE DIRECTION OF ROTATION OF A PISTON ENGINE
PROCEDE ET DISPOSITIF DE MACHINE A PISTON POUR SURVEILLER LE SENS DE ROTATION DE LA MACHINE A PISTON

(30) Priorität: 10.10.2002 DE 10247316
(43) Veröffentlichungstag der Anmeldung: 20.07.2005
(73) Patentinhaber: ROBERT BOSCH GMBH, 70442 Stuttgart (DE)
(72) Erfinder: KOHLER, Rolf, 71701 Schwieberdingen (DE); KOTTMANN, Matthias, 73240 Wendlingen (DE); BAUER, Matthias, 71636 Ludwigsburg (DE)
(86) Internationale Anmeldenummer: PCT/DE2003/003414
(87) Internationale Veröffentlichungsnummer: WO 2004/036017

(56) Entgegenhaltungen:
- WO-A-90/03508
- DE-A- 19 933 845
- PATENT ABSTRACTS OF JAPAN vol. 010, no. 174 (M-490), 19. Juni 1986 (1986-06-19) & JP 61 023847 A (NIPPON DENSO KK), 1. Februar 1986 (1986-02-01)

## Beschreibung

Die vorliegende Erfindung betrifft ein Verfahren zur Erkennung der Drehrichtung einer Kolbenmaschine, insbesondere einer Verbrennungsmaschine oder eines Kolbenkompressors. Die Kolbenmaschine umfasst
- mindestens einen Zylinder;
- einen in dem Zylinder hin- und herbewegbar geführten Kolben;
- einen im Inneren des Zylinders ausgebildeten Zylinderraum, der durch eine Zylinderinnenwand und den Kolben begrenzt wird;
- einen Einlasskanal, der über mindestens ein Einlassventil in den Zylinderraum mündet;
- einen Auslasskanal, der über mindestens ein Auslassventil in den Zylinderraum mündet; und
- mindestens eine in dem Einlasskanal angeordnete, ansteuerbare Drosselvorrichtung.

Die Erfindung betrifft außerdem eine Vorrichtung zur Erkennung der Drehrichtung einer Kolbenmaschine mit
- mindestens einem Zylinder;
- einem in dem Zylinder hin- und herbewegbar geführten Kolben;
- einem im Inneren des Zylinders ausgebildeten Zylinderraum, der durch eine Zylinderinnenwand und den Kolben begrenzt wird;
- einem Einlasskanal, der über mindestens ein Einlassventil in den Zylinderraum mündet;
- einem Auslasskanal, der über mindestens ein Auslassventil in den Zylinderraum mündet;
- mindestens einer in dem Einlasskanal angeordneten, ansteuerbaren Drosselvorrichtung; und
- einem Steuergerät zur Steuerung und/oder Regelung der Kolbenmaschine,

Des weiteren betrifft die Erfindung ein Steuergerät zur Steuerung und/oder Regelung einer Kolbenmaschine mit
- mindestens einem Zylinder;
- einem in dem Zylinder hin- und herbewegbar geführten Kolben;
- einem im Inneren des Zylinders ausgebildeten Zylinderraum, der durch eine Zylinderinnenwand und den Kolben begrenzt wird;
- einem Einlasskanal, der über mindestens ein Einlassventil in den Zylinderraum mündet;
- einem Auslasskanal, der über mindestens ein Auslassventil in den Zylinderraum mündet; und
- mindestens einer in dem Einlasskanal angeordneten, ansteuerbaren Drosselvorrichtung.

Die Erfindung betrifft schließlich auch ein Computerprogramm, das auf einem Rechengerät, insbesondere auf einem Mikroprozessor, ablauffähig ist.

### Stand der Technik

Um einen sicheren Betrieb einer Kolbenmaschine zu gewährleisten, muss sichergestellt werden, dass die Kolbenmaschine in eine vorgegebene Richtung dreht. Eine falsche Drehrichtung kann beispielsweise im Falle einer Verbrennungsmaschine durch eine falsche Zündwinkel- und Einspritzausgabe eines Steuergerätes der Brennkraftmaschine beim Start ausgelöst werden oder durch eine falsche Drehrichtung während des Startvorgangs, wie es beispielsweise durch Einkuppeln beim Rückwärtsrollen eines Kraftfahrzeugs mit eingelegtem Vorwärtsgang geschehen kann.

Eine falsche Drehrichtung kann im Falle einer Verbrennungsmaschine beispielsweise dazu führen, dass ein nachfolgender Startversuch aufgrund einer Überfettung des Kraftstoff-Luftgemisches für einige Zeit erfolglos bleibt. Außerdem besteht bei einer falschen Drehrichtung die Gefahr einer Beschädigung oder Zerstörung von Einrichtungen in dem Einlasskanal, wie beispielsweise dem Saugrohr, der Drosselvorrichtung oder eines Durchflussmessers. Falls die Verbrennungsmaschine in die falsche Richtung dreht, könnte es in einem Zylinderraum zu einer unkontrollierten Verbrennung kommen. Das Einlassventil des Zylinderraums wäre nach der Verbrennung offen und die heißen Abgase würden über das geöffnete Einlassventil in den Einlasskanal gelangen. Durch einen Rückschlag infolge der unkontrollierten Verbrennung in dem Zylinder sowie aufgrund der hohen Temperaturen der Abgase könnte es zu der Beschädigung oder Zerstörung der Einrichtungen in dem Einlasskanal kommen.

Ein Steuergerät zur Erkennung der Drehrichtung einer Brennkraftmaschine der eingangs genannten Art ist beispielsweise aus der DE 199 33 845 A1 bekannt. Dort wird eine Rotation einer Nockenwelle der Brennkraftmaschine durch einen Absolutwinkelgeber, wie er beispielsweise aus der DE 197 22 016 A1 bekannt ist, erfasst. Durch Abfrage des Absolutwinkels wird dann ermittelt, ob sich das Signal monoton fallend oder monoton steigend verhält. Aus dieser Information wird über ein Steuergerät die Drehrichtung ermittelt.

Bisher sind zuverlässige Absolutwinkelgeber, die den sogenannten magnetoresistiven Effekt und den sogenannten Hall-Effekt ausnutzen, relativ aufwendige Bauteile, die mindestens ein Steuergerät und mehrere Sensoren umfassen.

Die Aufgabe der vorliegenden Erfindung besteht darin, die Drehrichtung einer Kolbenmaschine zuverlässig, frühzeitig und auf eine einfache Weise zu erkennen.

Ausgehend von einem Verfahren der eingangs genannten Art, schlägt die Erfindung vor, den bei drehender Kolbenmaschine in dem Einlasskanal herrschenden Druck zu messen, mit einem vorgebbaren Schwellwert zu vergleichen und mittels des Ergebnisses des Vergleichs dann die Drehrichtung der Kolbenmaschine zu ermitteln. Dabei wird zumindest für die Zeit der Druckmessung eine ansteuerbare Drosselvorrichtung geschlossen, um den Bereich des Zylinderraums und des Einlasskanals von vorgeschalteten Systemen, beispielsweise von einem Turbolader oder einem (Unter-)Druckspeicher zu entkoppeln.

### Vorteile der Erfindung

Auf dieser Basis können dann geeignete Gegenmaßnahmen getroffen werden, um eine Beschädigung der Kolbenmaschine zu verhindern. Die Gegenmaßnahmen bestehen beispielsweise darin, die Kolbenmaschine bei einer falschen Drehrichtung anzuhalten. Dies kann dadurch geschehen, dass beispielsweise in einem Verbrennungsmotor die Zufuhr des Kraftstoff-Luftgemisches oder die Zündung unterbrochen wird.

Die prinzipielle Arbeitsweise einer Kolbenmaschine besteht darin, dass in einer Ansaugphase über ein geöffnetes Einlassventil ein zumeist gasförmiger Stoff in den Zylinderinnenraum eingesaugt wird. Dies geschieht dadurch, dass das Volumen des Zylinderinnenraumes durch eine entsprechende Bewegung des Kolbens vergrößert wird.
Dann wird das Einlassventil geschlossen, der sich im Zylinderinnenraum befindliche Stoff wird durch eine anschließende gegenläufige Bewegung des Kolbens komprimiert und dann über ein Auslassventil wieder ausgestoßen. Bei einer Verbrennungsmaschine erfolgt während oder nach der Kompression eines Kraftstoff-Luft-Gemisches eine Zündung des Gemisches und anschließend ein Ausstoßen über das Auslassventil. Bei einem Kolbenkompressor wird der über das Einlassventil angesaugte gasförmige Stoff während oder nach der Kompression über das Auslassventil ausgestoßen. Dadurch kann entweder in einem an den Einlasskanal angeschlossenen Körper ein Unterdruck oder in einem an den Auslasskanal angeschlossenen Körper ein Überdruck erzeugt werden.

Durch diese Arbeitsweise bedingt, besitzt eine Kolbenmaschine eine vorgesehene Drehrichtung. Wird versucht, die Kolbenmaschine in der entgegengesetzten Drehrichtung zu betreiben, so kehren sich die Funktionen des Einlass- und des Auslassventils um. Das würde bedeuten, dass über den Auslasskanal angesaugt und der komprimierte Stoff über das Einlassventil in den Einlasskanal abgegeben wird. Damit herrscht zu diesem Zeitpunkt in dem Einlasskanal (und damit auch in dem Zylinderraum) ein höherer Druck vor als bei in der vorgesehenen Drehrichtung betriebener Kolbenmaschine. Für den in dem Einlasskanal herrschenden Druck kann also ein Schwellwert angegeben werden. Bei in der vorgesehenen Drehrichtung betriebenen Kolbenmaschine wird der Schwellwert unterschritten. Wird der Schwellwert jedoch überschritten, kann auf einen Betrieb der Kolbenmaschine in der falschen Drehrichtung geschlossen werden.

Gemäß einer vorteilhaften Weiterbildung der vorliegenden Erfindung wird vorgeschlagen, dass der Schwellwert in Abhängigkeit von einem in dem Auslasskanal herrschenden Druck ermittelt wird. Dieses erfindungsgemäß weitergebildete Verfahren folgt der Beobachtung, dass in der vorgesehenen Drehrichtung einer Kolbenmaschine zu keinem Zeitpunkt der Druck in dem Einlasskanal höher ist, als der Druck in dem Auslasskanal. In einer zu dieser Drehrichtung entgegengesetzten Drehrichtung ist dies jedoch möglich. Anhand dieses Kriteriums kann folglich eine aktuell vorherrschende Drehrichtung bestimmt werden.

In einer bevorzugten Ausführungsform des Verfahrens wird für eine als Brennkraftmaschine ausgebildete Kolbenmaschine vorgeschlagen, dass der Schwellwert in Abhängigkeit von einem Umgebungsdruck und einem Abgasgegendruck ermittelt wird. Dadurch kann der Druck in dem Auslasskanal auf einfache Weise näherungsweise modelliert werden.

Vorteilhafterweise wird der Schwellwert, der für die Ermittlung der Drehrichtung notwendig ist, durch einen vorgebbaren für die Kolbenmaschine spezifischen Maximaldruck beschrieben. Der Maximalwert kann im Vorfeld der Drehrichtungsermittlung in Abhängigkeit von dem Maschinentyp bestimmt und in einem dafür vorgesehenen Speicherplatz eines Speichers eines Steuergeräts für die Kolbenmaschine abgelegt werden. Damit kann sowohl die Messung des Druckes in dem Auslasskanal als auch die Messung beziehungsweise die Modellierung des Umgebungsdruckes und des Abgasgegendruckes entfallen.

Als eine weitere Lösung der Aufgabe der vorliegenden Erfindung wird ausgehend von der Vorrichtung der eingangs genannten Art vorgeschlagen, dass die Vorrichtung umfasst:
- Mittel zum Erfassen einer Drehzahl;
- Mittel zum Ansteuern der Drosselvorrichtung; und
- Mittel zum Erfassen des Drucks in dem Einlasskanal bei geschlossener Drosselvorrichtung; und
das Steuergerät bei Erkennen einer Drehbewegung der Kolbenmaschine ein Schließen der Drosselvorrichtung veranlasst, nach einer vorgebbaren Messdauer den Druck in dem Einlasskanal erfasst, den erfassten Druck mit einem vorgebbaren Schwellwert vergleicht und die Drehrichtung der Kolbenmaschine anhand des Ergebnisses des Vergleichs bestimmt.

Gemäß einer vorteilhaften Weiterbildung der Erfindung wird vorgeschlagen, dass die Vorrichtung Mittel, beispielsweise einen Drucksensor, zum Erfassen des Druckes in dem Auslasskanal aufweist. Der in dem Auslasskanal herrschende Druck kann als Schwellwert für den Vergleich mit dem in dem Einlasskanal herrschenden Druck und damit für die Drehrichtungsermittlung herangezogen werden. Die Erkennung der Drehrichtung erfolgt dann durch Vergleich des Druckes im Einlasskanal mit dem Druck im Auslasskanal.

Gemäß einer bevorzugten Ausführungsform der Erfindung wird vorgeschlagen, dass die Vorrichtung Mittel zum Modellieren des Abgasgegendrucks und Mittel zum Erfassen des Umgebungsdruckes aufweist. Anhand des Umgebungsdrucks und des Abgasgegendrucks kann der in dem Auslasskanal herrschende Druck und damit auch der Schwellwert auf einfache Weise näherungsweise ermittelt werden. Der Schwellwert wird dann aus der Summe dieser beiden Drücke bestimmt .

Vorteilhafterweise umfasst das Steuergerät Mittel, beispielsweise ein elektrisches Speicherelement, zum Speichern eines für die Kolbenmaschine spezifischen Maximaldruckes. Der Maximaldruck wird im Vorfeld der Drehrichtungserkennung in Abhängigkeit von dem Kolbenmaschinentyp ermittelt, in dem Speicherelement abgelegt und bei Bedarf als Schwellwert für die Drehrichtungsermittlung aufgerufen. Diese Ausführungsform benötigt somit keine Mittel zur Messung des Umgebungsdrucks, des Abgasgegendrucks oder des Drucks in dem Auslasskanal.

Vorzugsweise umfassen die Mittel zur Druckerfassung in dem Einlasskanal einen digitalen Druckschalter, der bei einem Über- oder Unterschreiten des Schwellwertes einen Schaltvorgang auslöst. Anhand des Ausgangssignals des Druckschalters kann dann bestimmt werden, ob sich die Kolbenmaschine in der richtigen Drehrichtung bewegt.

Als noch eine weitere Lösung der Aufgabe der vorliegenden Erfindung wird ausgehend von dem Steuergerät der eingangs genannten Art vorgeschlagen, dass das Steuergerät
- eine Drehbewegung der Kolbenmaschine erkennt;
- die Stellung der Drosselvorrichtung steuert; und
- bei erkannter Drehbewegung der Kolbenmaschine eine Schließung der Drosselvorrichtung veranlasst, den Druck in dem Einlasskanal nach einer vorgebbaren Messdauer erfasst, diesen mit einem vorgebbaren Schwellwert vergleicht und anhand des Vergleichs die Drehrichtung der Kolbenmaschine ermittelt.

Von besonderer Bedeutung ist die Realisierung der vorliegenden Erfindung in Form eines Computerprogramms. Dabei ist das Computerprogramm auf einem Rechengerät, insbesondere auf einem Mikroprozessor, ablauffähig und zur Ausführung des erfindungsgemäßen Verfahrens geeignet. In diesem Fall wird also die Erfindung durch das Computerprogramm realisiert, so dass dieses Computerprogramm in gleicher Weise die Erfindung darstellt wie das Verfahren, zu dessen Ausführung das Computerprogramm geeignet ist. Das Computerprogramm ist vorzugsweise auf einem Speicherelement abgespeichert. Als Speicherelement kann insbesondere ein Random-Access-Memory, ein Read-Only-Memory oder ein Flash-Memory zur Anwendung kommen.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: eine erste bevorzugte Ausführungsform einer erfindungsgemäßen Vorrichtung;
- Figur 2: eine zweite bevorzugte Ausführungsform einer erfindungsgemäßen Vorrichtung; und
- Figur 3: ein Ablaufdiagramm eines erfindungsgemäßen Verfahrens.

### Beschreibung der Ausführungsbeispiele

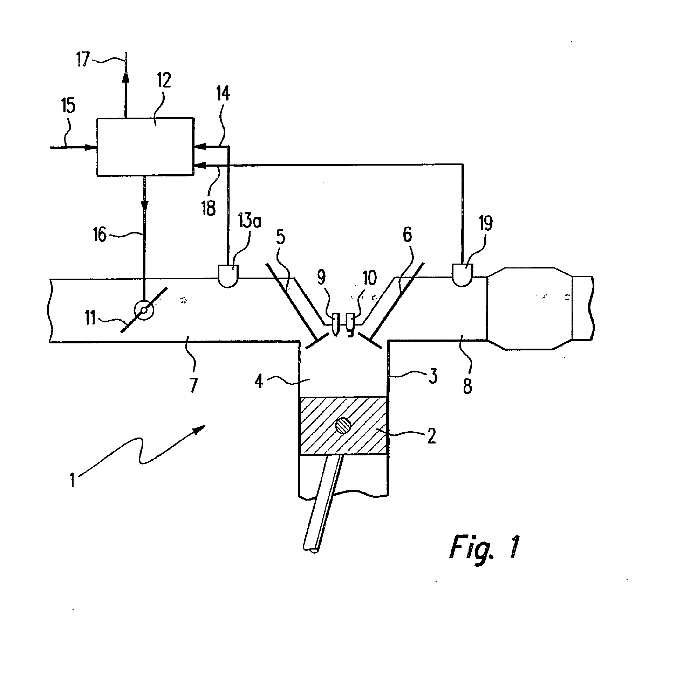

Figur 1 zeigt eine als Brennkraftmaschine 1 ausgebildete Kolbenmaschine mit einem Steuergerät 12 zur Ermittlung der Drehrichtung der Brennkraftmaschine 1. Die Brennkraftmaschine 1 umfasst einen Zylinder 3 in dessen Zylinderinnenraum ein Kolben 2 hin- und herbewegbar geführt ist. An der dem Kolben 2 gegenüberliegenden Seite des Zylinders 3 befindet sich ein Einlassventil 5, ein Auslassventil 6, sowie eine Einspritzdüse 9 zur Injektion von Kraftstoff und eine Zündkerze 10 zum Entzünden des Kraftstoff-Luft-Gemisches. Im Inneren des Zylinders 3 wird ein Zylinderraum 4, der in dem Ausführungsbeispiel aus Figur 1 als ein Brennraum ausgebildet ist, durch eine Zylinderinnenwand, den Kolben 2, sowie das Einlassventil 5 und das Auslassventil 6 begrenzt.

Ein Einlasskanal 7 mündet über das Einlassventil 5 in den Brennraum 4. In dem Einlasskanal 7 ist eine Drosselvorrichtung 11 angebracht, die über eine Steuerleitung 16 von einem Steuergerät 12 ansteuerbar ist. Außerdem befindet sich in dem Einlasskanal 7 eine Vorrichtung 13a zur Druckerfassung, die vorzugsweise als ein Drucksensor ausgebildet ist. Die Vorrichtung 13a führt die erfassten Druckwerte über eine Leitung 14 dem Steuergerätes 12 zu.

Ein Auslasskanal 8 mündet über das Auslassventil 6 in den Brennraum 4. In dem Auslasskanal 8 ist eine weitere Vorrichtung 19 zur Druckerfassung angeordnet, welche ebenfalls als ein Drucksensor ausgebildet ist. Die von der Vorrichtung 19 erfassten Werte werden über eine Leitung 18 an das Steuergerät 12 weitergeleitet.

Das Steuergerät 12 umfasst Mittel zur Erkennung der Drehrichtung der Brennkraftmaschine 1. Dazu erhält das Steuergerät 12 über eine weitere Leitung 15 Informationen über die Drehzahl der Brennkraftmaschine, was beispielsweise über die Abfrage einer markierten Geberscheibe, die drehfest an einer Kurbelwelle der Brennkraftmaschine 1 befestigt ist, und eine anschließende Auswertung der abgefragten Werte durch das Steuergerät 12 realisiert ist. Über die Steuerleitung 17 schließlich stellt das Steuergerät 12 die erkannte Drehrichtung einem übergeordneten Steuergerät (nicht dargestellt) zur Verfügung. Alternativ oder zusätzlich kann das Steuergerät 12 bei einer falschen Drehrichtung auch geeignete Gegenmaßnahmen vorsehen, welche über die Leitung 17 an die Brennkraftmaschine 1 übermittelt werden können. Die Gegenmaßnahmen umfassen bspw. ein Abschalten der Brennkraftmaschine 1 durch Abschalten der Kraftstoffeinspritzung über das Einspritzventil 9.

Bei geöffnetem Einlassventil 5 und geschlossenem Auslassventil 8 herrscht bei einer Abwärtsbewegung des Kolbens 2 in dem Zylinderinnenraum 4 und in dem Einlasskanal 7 ein geringerer Druck als in dem Auslasskanal 8. Durch den Unterdruck wird Luft oder ein Kraftstoff-LuftGemisch in den Brennraum 4 des Zylinders 3 gesaugt. Die beiden Drücke in dem Einlasskanal 7 und in dem Auslasskanal 8 werden über die Vorrichtungen 13a und 19 zur Druckerfassung gemessen, und die ermittelten Werte werden dem Steuergerät 12 zugeführt. Bei dem dargestellten Beispiel entspricht die Drehrichtung der Brennkraftmaschine 1 also der für einen sicheren Betrieb der Brennkraftmaschine 1 vorgesehenen richtigen Drehrichtung.

Bewegt sich nun aber der Kolben 2 bei gleicher Stellung des Einlassventils 5 und des Auslassventils 6 aufwärts, das heißt in die falsche Richtung, herrscht in dem Einlasskanal 7 ein Überdruck, beziehungsweise ein höherer Druck als in dem Auslasskanal 8. Folglich entweichen die verbrannten Abgase nicht durch das Auslassventil 6, sondern durch das geöffnete Einlassventil 5 in den Einlasskanal 7 und können zu einer Beschädigung oder gar Zerstörung von in dem Einlasskanal 7 angeordneten Komponenten führen. Durch einen Vergleich in dem Steuergerät 12 der beiden von den Vorrichtungen 13a und 19 zur Druckerfassung ermittelten Druckwerte wird dann festgestellt, dass sich die Brennkraftmaschine 1 in die falsche Richtung dreht.

Dies geschieht auf Grund der Tatsache, das nun der Druck, der mittels der Vorrichtung 13a zur Druckerfassung ermittelt wird, größer ist als der Wert, der über die Vorrichtung zur Druckerfassung 19 in dem Auslasskanal 8 ermittelt wird. Hier muss allerdings beachtet werden, dass zum Messen des Drucks im Einlasskanal 7 die Drosselvorrichtung 11 geschlossen sein sollte. Das Schließen der Drosselvorrichtung 11 wird dabei von dem Steuergerät 12 veranlasst. Erst dann werden der in dem Einlasskanal 7 sowie der in dem Auslasskanal 8 herrschende Druck nach einer vorgebbaren Messdauer ermittelt und die Drücke miteinander verglichen.

Falls der in dem Einlasskanal 7 ermittelte Druck größer als der entsprechend ermittelte Druck in dem Auslasskanal 8 ist, herrscht eine Drehrichtung entgegen der für einen sicheren Betrieb vorgesehenen Drehrichtung vor. Ist der ermittelte Druck in dem Einlasskanal 7 kleiner oder gleich dem entsprechend ermittelten Druck in dem Auslasskanal 8, so entspricht die aktuelle Drehrichtung der für einen sicheren Betrieb der Kolbenmaschine 1 vorgesehenen Drehrichtung.

Insbesondere lässt sich für den in dem Einlasskanal 7 herrschenden Druck bei geschlossener Drosselvorrichtung 11 im Vorfeld der Drehrichtungsermittlung ein Maximalwert Pmax für den Druck angeben, der bei der für einen sicheren Betrieb der Kolbenmaschine 1 vorgesehenen Drehrichtung nicht überschritten wird.

Zusammenfassend wird also bei geschlossener Drosselvorrichtung 11 und erkannter Drehbewegung der in dem Einlasskanal 7 oder dem Brennraum 4 herrschende Druck nach einer vorgebbaren Messdauer erfasst und mit einem Schwellwert verglichen. Falls der in dem Einlasskanal 7 oder dem Brennraum 4 herrschende Druck ein Unterdruck ist (erfasster Druck < Schwellwert), ist die Drehrichtung der Brennkraftmaschine 1 richtig. Falls in dem Einlasskanal 7 jedoch ein Überdruck herrscht (erfasster Druck > Schwellwert), deutet dies auf eine falsche Drehrichtung hin. Als Schwellwert kann insbesondere der in dem Auslasskanal 8 herrschende aktuelle Druck oder ein im Vorfeld der Drehrichtungserkennung ermittelter Motortypabhängiger maximaler Druckwert Pmax herangezogen werden. Der in dem Auslasskanal 8 herrschende Druck kann durch einfache Summenbildung näherungsweise aus dem Umgebungsdruck und dem Abgasgegendruck modelliert werden.

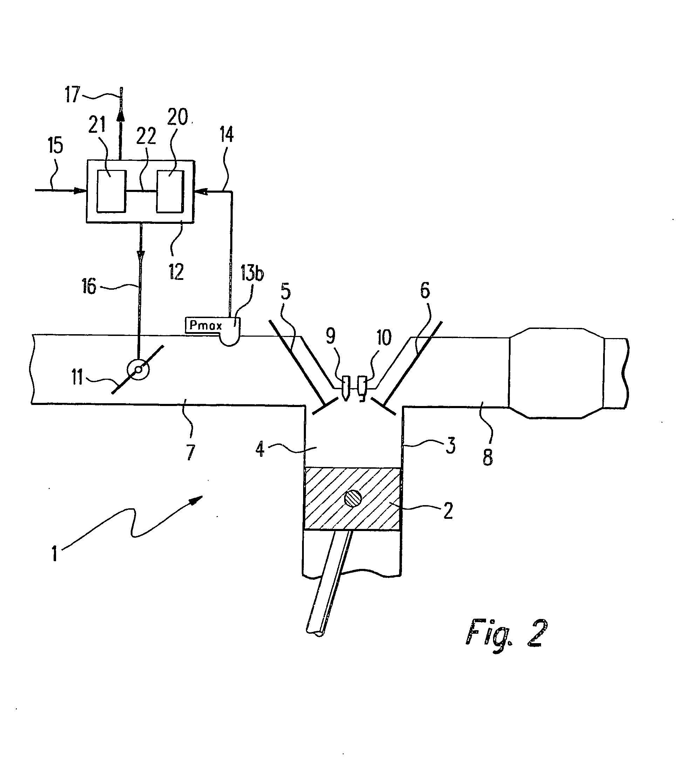

In Figur 2 ist eine weitere als Brennkraftmaschine 1 ausgebildete Kolbenmaschine mit einem Steuergerät 12 zur Ermittlung der Drehrichtung der Brennkraftmaschine 1 dargestellt. Diese Ausführungsform geht von einem vorab ermittelten Maximalwert Pmax aus. Hier wird deshalb auf die Vorrichtung 19 zur Druckerfassung in dem Auslasskanal 8 verzichtet. Außerdem ist hier die Vorrichtung zur Druckerfassung 13b als ein digitaler Druckschalter 13b ausgestaltet, der den Druck erfasst und ab einem zuvor ermittelten motorspezifischer Maximalwert Pmax, der den maximal zu erwartenden Druck in dem Einlasskanal 7 bei erkannter Drehbewegung und geschlossener Drosselvorrichtung 11 beschreibt, ein Signal über die Leitung 14 an das Steuergerät 12 weitergibt, woraus das Steuergerät 12 dann erkennen kann, dass die Drehrichtung der Brennkraftmaschine 1 falsch ist.

Der Maximalwert Pmax wird in einem Speicherelement 20 des Steuergeräts 12 abgelegt. Das Speicherelement 20 ist beispielsweise als ein Random-Access-Memory (RAM), als ein Read-Only-Memory (ROM) oder als ein Flash-Speicher ausgebildet. In dem Speicherelement 20 ist außerdem ein Computerprogramm abgelegt, das zur Ausführung des erfindungsgemäßen Verfahrens dient, wenn es auf einem Rechengerät 21, das insbesondere als ein Mikroprozessor ausgebildet ist, abläuft. Zur Abarbeitung des Computerprogramms wird es von dem Speicherelement 20 über eine Datenverbindung 22 entweder abschnittsweise beziehungsweise befehlsweise oder als ganzes an das Rechengerät 21 übertragen. Die Datenverbindung ist beispielsweise als ein Bussystem ausgebildet. Der Schalter 13b kann beispielsweise als ein elektromagnetischer Schalter ausgebildet sein, dessen Öffnungsdruck in Abhängigkeit von der Größe eines an seinem Elektromagneten anliegenden Stroms festgelegt werden kann. Die Größe des anliegenden Stroms kann in Abhängigkeit von dem in dem Speicherelement 20 abgelegten Wert Pmax ermittelt und über die Leitung 14 an den Schalter 13b übertragen werden.

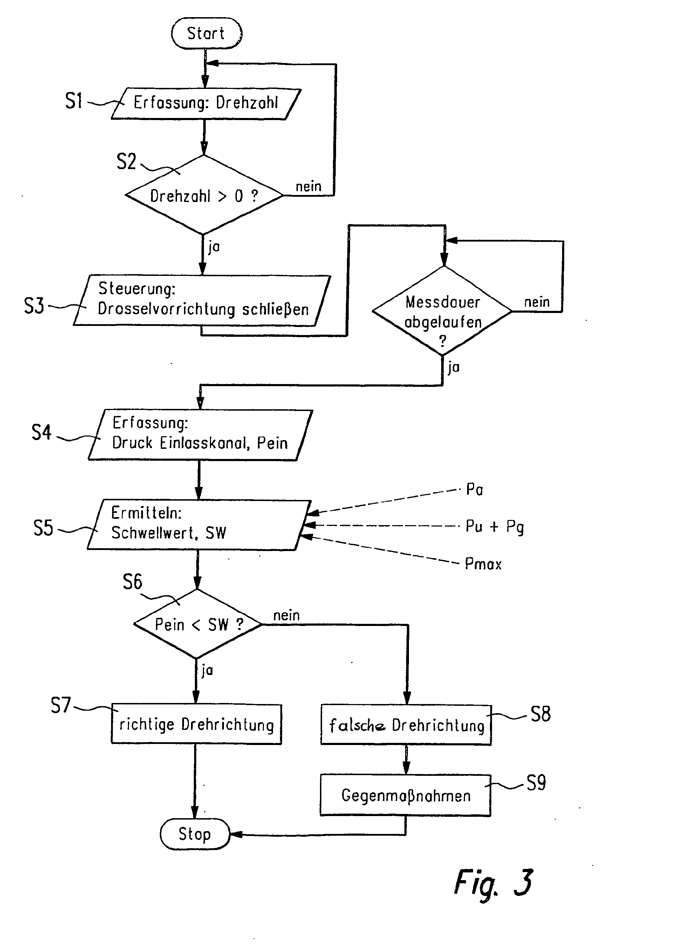

In Figur 3 ist ein Ablaufdiagramm des erfindungsgemäßen Verfahrens gemäß einer bevorzugten Ausführungsform dargestellt. Vorteilhafterweise wird dieses Verfahren während einer ersten Drehbewegungen beim Start der Kolbenmaschine aus dem Stillstand heraus durchgeführt. Dabei wird in einem ersten Schritt S1 die Drehzahl der Kolbenmaschine erfasst. In einem Abfrageschritt S2 wird überprüft, ob Drehzahl > 0 gilt, also ob eine Drehbewegung der Kolbenmaschine vorliegt. Ist dies nicht der Fall, wird zu dem Schritt S1 zurückgesprungen und der Ablauf ab dieser Position wiederholt.

Wird eine Drehbewegung erkannt, so wird in einem Schritt S3 ein Schließen der Drosselvorrichtung 11 veranlasst und in einem folgenden Abfrageschritt überprüft, ob eine vorgebbare Messdauer abgelaufen ist. Dabei ist die vorgebbare Messdauer so gewählt, dass sich in dem Einlasskanal 7 ein diagnosesicherer Druck einschwingen kann. In einem Schritt S4 wird dann mittels des Drucksensors 13a oder 13b der Druck Pein in dem Einlasskanal 7 der Kolbenmaschine erfasst.

Daraufhin wird in einem Schritt S5 ein Schwellwert SW ermittelt. Dieser ist entweder bereits als motortypabhängiger Maximalwert Pmax in dem Speicherelement 20 des Steuergerätes 12 vorhanden oder wird beispielsweise durch Messung des Druckes Pa in dem Auslasskanal 8 der Kolbenmaschine mittels eines Drucksensors 19 oder durch Summenbildung eines erfassten Umgebungsdruckes Pu mit einem modellierten Abgasgegendruck Pg ermittelt. In einem Abfrageschritt S6 wird der in dem Schritt S4 erfasste Druck Pein mit dem in Schritt S5 ermittelten Schwellwert SW verglichen. Ist der im Einlasskanal 7 erfasste Druck Pein kleiner als der Schwellwert SW, so wird in einem Schritt S7 auf eine richtige Drehrichtung der Kolbenmaschine geschlossen und das Verfahren endet.

Ergibt sich in dem Abfrageschritt S6 jedoch, dass der erfasste Druck Pein größer ist als der Schwellwert SW, so wird zu einem Schritt S8 verzweigt, in dem auf eine falsche Drehrichtung geschlossen wird. Anschließend wird zu einem Schritt S9 verzweigt, wo Gegenmaßnahmen, wie beispielsweise ein Abschalten der Zündeinrichtung oder ein Sperren der Kraftstoffzufuhr, eingeleitet werden, woraufhin das Verfahren endet.

Mit dem erfindungsgemäßen Verfahren kann ein Anlauf einer Kolbenmaschine in einem falsche Drehrichtung verhindert werden. Das ist insbesondere bei Brennkraftmaschinen von Bedeutung, die ohne einen elektrischen Starter oder Startergenerator, also allein durch Befüllen einzelner oder mehrerer Zylinder der Brennkraftmaschine mit Kraftstoff und anschließendes gezieltes Entzünden des Kraftstoff-Luft-Gemisches gestartet werden. Vor allem direkt einspritzende Brennkraftmaschinen können auf eine solche Weise gestartet werden.

## Patentansprüche

1. Verfahren zur Erkennung der Drehrichtung einer Kolbenmaschine, mit
- mindestens einem Zylinder (3);
- einem in dem Zylinder (3) hin- und herbewegbar geführten Kolben (2);
- einem im Inneren des Zylinders (3) ausgebildeten Zylinderraum (4), der durch eine Zylinderinnenwand und den Kolben (2) begrenzt wird;
- einem Einlasskanal (7), der über mindestens ein Einlassventil (5) in den Zylinderraum (4) mündet;
- einem Auslasskanal (8), der über mindestens ein Auslassventil (6) in den Zylinderraum (4) mündet; und
- mindestens einer in dem Einlasskanal (7) angeordneten, ansteuerbaren Drosselvorrichtung (11),
**dadurch gekennzeichnet, dass** der in dem Einlasskanal (7) herrschende Druck bei geöffnetem Einlassventil (5) erfasst, mit einem vorgebbaren Schwellwert (SW) verglichen und anhand des Ergebnisses des Vergleichs die Drehrichtung der Kolbenmaschine ermittelt wird, wobei mindestens für die Zeit der Druckmessung die Drosselvorrichtung (11) geschlossen wird.

2. Verfahren nach Anspruch 1, **dadurch gekennzeichnet, dass** der Schwellwert (SW) in Abhängigkeit von einem in dem Auslasskanal (8) herrschenden Druck ermittelt wird.

3. Verfahren nach Anspruch 1 oder 2, wobei die Kolbenmaschine als eine Brennkraftmaschine (1) ausgebildet ist, **dadurch gekennzeichnet, dass** der Schwellwert (SW) in Abhängigkeit von einem Umgebungsdruck und einem Abgasgegendruck ermittelt wird.

4. Verfahren nach Anspruch 1, **dadurch gekennzeichnet, dass** der Schwellwert (SW) durch einen vorgebbaren für die Kolbenmaschine spezifischen Maximaldruck (Pmax) beschrieben wird.

5. Vorrichtung zur Erkennung der Drehrichtung einer Kolbenmaschine mit
- mindestens einem Zylinder (3);
- einem in dem Zylinder (3) hin- und herbewegbar geführten Kolben (2);
- einem im Inneren des Zylinders (3) ausgebildeten Zylinderraum (4), der durch eine Zylinderinnenwand und den Kolben (2) begrenzt wird;
- einem Einlasskanal (7), der über mindestens ein Einlassventil (5) in den Zylinderraum (4) mündet;
- einem Auslasskanal (8), der über mindestens ein Auslassventil (6) in den Zylinderraum (4) mündet;
- mindestens einer in dem Einlasskanal (7) angeordneten, ansteuerbaren Drosselvorrichtung (11); und
- einem Steuergerät (12) zur Steuerung und/oder Regelung der Kolbenmaschine, wobei die Vorrichtung umfasst:
- Mittel zum Erfassen einer Drehzahl (5);
- Mittel zum Ansteuern der Drosselvorrichtung (11); und
- Mittel (13a; 13b) zum Erfassen des Druckes in dem Einlasskanal (7) bei geöffnetem Einlassventil (5) und geschlossener Drosselvorrichtung (11);
**dadurch gekennzeichnet, dass**
das Steuergerät (12) bei Erkennen einer Drehbewegung der Kolbenmaschine ein Schließen der Drosselvorrichtung (11) veranlasst, nach einer vorgebbaren Messdauer den Druck (Pein) in dem Einlasskanal (7) erfasst, den erfassten Druck mit einem vorgebbaren Schwellwert (SW) vergleicht und die Drehrichtung der Kolbenmaschine anhand des Ergebnisses des Vergleichs bestimmt.

6. Vorrichtung nach Anspruch 5, **dadurch gekennzeichnet, dass** die Vorrichtung Mittel (19) zum Erfassen des Druckes in dem Auslasskanal (8) aufweist.

7. Vorrichtung nach Anspruch 5, **dadurch gekennzeichnet, dass** die Vorrichtung Mittel zum Modellieren des Abgasgegendrucks und Mittel zum Erfassen des Umgebungsdruckes aufweist.

8. Vorrichtung nach Anspruch 5, **dadurch gekennzeichnet, dass** das Steuergerät (12) Mittel (20) zum Speichern eines für die Kolbenmaschine spezifischen Maximaldruckes (Pmax) aufweist.

9. Vorrichtung nach einem der Ansprüche 5 bis 8, **dadurch gekennzeichnet, dass** die Mittel zur Druckerfassung in dem Einlasskanal (7) einen digitalen Druckschalter (13b) umfassen, der bei einem Über- oder Unterschreiten des Schwellwertes (SW) einen Schaltvorgang auslöst.

10. Steuergerät (12) zum Steuern und/oder Regeln einer Kolbenmaschine mit
- mindestens einem Zylinder (3);
- einem in dem Zylinder (3) hin- und herbewegbar geführten Kolben (2);
- einem im Inneren des Zylinders (3) ausgebildeten Zylinderraum (4), der durch eine Zylinderinnenwand und den Kolben (2) begrenzt wird;
- einem Einlasskanal (7), der über mindestens ein Einlassventil (5) in den Zylinderraum (4) mündet;
- einem Auslasskanal (8), der über mindestens ein Auslassventil (6) in den Zylinderraum (4) mündet; und
- mindestens einer in dem Einlasskanal (7) angeordneten, ansteuerbaren Drosselvorrichtung (11),
wobei
das Steuergerät (12)
- eine Drehbewegung der Kolbenmaschine erkennt; und
- die Stellung der Drosselvorrichtung (11) steuert;
**dadurch gekennzeichnet, dass** das Steuergerät (12)
- bei erkannter Drehbewegung der Kolbenmaschine eine Schließung der Drosselvorrichtung (11) veranlasst, den Druck in dem Einlasskanal (7) nach einer vorgebbaren Messdauer erfasst, diesen mit einem vorgebbaren Schwellwert (SW) vergleicht und anhand des Vergleichs die Drehrichtung der Kolbenmaschine ermittelt.

11. Computerprogramm, das auf einem Rechengerät (21), insbesondere auf einem Mikroprozessor, ablauffähig ist, **dadurch gekennzeichnet, dass** das Computerprogramm ein Verfahren nach einem der Ansprüche 1 bis 4 ausführt, wenn es auf dem Rechengerät (21) abläuft.

12. Computerprogramm nach Anspruch 11, **dadurch gekennzeichnet, dass** das Computerprogramm auf einem Speicherelement (20), insbesondere auf einem Random-Access-Memory, Read-Only-Memory, oder Flash-Memory abgespeichert ist.

## Claims

1. Method for ascertaining the direction of rotation of a piston engine, having
- at least one cylinder (3);
- a piston (2) guided in reciprocating fashion in the cylinder (3);
- a cylinder space (4) which is formed in the interior of the cylinder (3) and is delimited by a cylinder inner wall and the piston (2);
- an intake duct (7), which opens out into the cylinder space (4) via at least one intake valve (5);
- an exhaust duct (8), which opens out into the cylinder space (4) via at least one exhaust valve (6); and
- at least one actuable throttling apparatus (11) arranged in the intake duct (7),
**characterized in that** the pressure which is present in the intake duct (7) when the intake valve (5) is open is recorded, compared with a predeterminable threshold value (SW) and the direction of rotation of the piston engine is determined on the basis of the result of the comparison, with the throttling apparatus (11) being closed at least for the period of the pressure measurement.

2. Method according to Claim 1, **characterized in that** the threshold value (SW) is determined as a function of a pressure which is present in the exhaust duct (8).

3. Method according to Claim 1 or 2, in which the piston engine is designed as an internal combustion engine (1), **characterized in that** the threshold value (SW) is determined as a function of an ambient pressure and an exhaust gas back pressure.

4. Method according to Claim 1, **characterized in that** the threshold value (SW) is described by a predeterminable maximum pressure (Pmax) that is specific to the piston engine.

5. Apparatus for ascertaining the direction of rotation of a piston engine having
- at least one cylinder (3);
- a piston (2) guided in reciprocating fashion in the cylinder (3);
- a cylinder space (4) which is formed in the interior of the cylinder (3) and is delimited by a cylinder inner wall and the piston (2);
- an intake duct (7), which opens out into the cylinder space (4) via at least one intake valve (5);
- an exhaust duct (8), which opens out into the cylinder space (4) via at least one exhaust valve (6);
- at least one actuable throttling apparatus (11) arranged in the intake duct (7), and
- a control unit (12) for controlling the piston engine,
the apparatus comprising:
- means for recording an engine speed (5);
- means for actuating the throttling apparatus (11); and
- means (13a; 13b) for recording the pressure in the intake duct (7) with the intake valve (5) open and the throttling apparatus (11) closed;
**characterized in that** the control unit (12), when ascertaining a direction of rotation of the piston engine, causes the throttling apparatus (11) to be closed, records the pressure (Pin) in the intake duct (7) after a predeterminable measurement time; compares the recorded pressure with a predeterminable threshold value (SW) and determines the direction of rotation of the piston engine on the basis of the result of the comparison.

6. Apparatus according to Claim 5, **characterized in that** the apparatus has means (19) for recording the pressure in the exhaust duct (8).

7. Apparatus according to Claim 5, **characterized in that** the apparatus has means for modelling the exhaust gas back pressure and means for recording the ambient pressure.

8. Apparatus according to Claim 5, **characterized in that** the control unit (12) has means (20) for storing a maximum pressure (Pmax) that is specific to the piston engine.

9. Apparatus according to one of Claims 5 to 8, **characterized in that** the means for recording the pressure in the intake duct (7) comprise a digital pressure switch (13b) which triggers a switching operation if the pressure exceeds or drops below the threshold value (SW).

10. Control unit (12) for controlling a piston engine having
- at least one cylinder (3);
- a piston (2) guided in reciprocating fashion in the cylinder (3);
- a cylinder space (4) which is formed in the interior of the cylinder (3) and is delimited by a cylinder inner wall and the piston (2);
- an intake duct (7), which opens out into the cylinder space (4) via at least one intake valve (5);
- an exhaust duct (8), which opens out into the cylinder space (4) via at least one exhaust valve (6); and
- at least one actuable throttling apparatus (11) arranged in the intake duct (7),
the control unit (12)
- detecting a rotary movement of the piston engine; and
- controlling the position of the throttling apparatus (11);
**characterized in that** the control unit (12)
- when a rotary movement of the piston engine is detected, causes the throttling apparatus (11) to close, records the pressure in the intake duct (7) after a predeterminable measurement time, compares this pressure with a predeterminable threshold value (SW) and determines the direction of rotation of the piston engine on the basis of the comparison.

11. Computer program, which can run on a computer unit (21), in particular on a microprocessor, **characterized in that** the computer program executes a method according to one of Claims 1 to 4 when it is run on the computer unit (21).

12. Computer program according to Claim 11, **characterized in that** the computer program is stored on a memory element (20), in particular on a random access memory, read only memory or flash memory.

## Revendications

1. Procédé de détection du sens de rotation d'une machine à piston, comprenant :
- au moins un cylindre (3) ;
- un piston (2) guidé dans un mouvement de va-et-vient dans le cylindre (3) ;
- une chambre de cylindre (4) formée à l'intérieur du cylindre (3) et délimitée par une paroi intérieure de cylindre et le piston (2) ;
- un canal d'admission (7) qui débouche dans la chambre de cylindre (4) par l'intermédiaire d'au moins une soupape d'admission (5) ;
- un canal d'échappement (8) qui débouche dans la chambre de cylindre (4) par l'intermédiaire d'au moins une soupape d'échappement (6) ; et
- au moins un dispositif d'étranglement commandable (11) disposé dans le canal d'admission (7),
**caractérisé en ce qu'**
on saisit la pression régnant dans le canal d'admission (7) lorsque la soupape d'admission (5) est ouverte, on la compare avec une valeur de seuil (SW) prédéfinie et on détermine à l'aide du résultat de la comparaison le sens de rotation de la machine à piston, le dispositif d'étranglement (11) étant fermé au moins pendant la durée de la mesure de pression.

2. Procédé selon la revendication 1,
**caractérisé en ce qu'**
on détermine la valeur seuil (SW) en fonction d'une pression régnant dans le canal d'échappement (8).

3. Procédé selon la revendication 1 ou 2, la machine à piston étant un moteur à combustion interne (1),
**caractérisé en ce qu'**
on détermine la valeur de seuil (SW) en fonction d'une pression ambiante et d'une contre-pression de gaz d'échappement.

4. Procédé selon la revendication 1,
**caractérisé en ce qu'**
on définit la valeur de seuil (SW) par une pression maximale (Pmax) spécifique prédéfinie pour la machine à piston.

5. Dispositif de détection du sens de rotation d'une machine à piston comprenant :
- au moins un cylindre (3) ;
- un piston (2) guidé dans un mouvement de va-et-vient dans le cylindre (3) ;
- une chambre de cylindre (4) formée à l'intérieur du cylindre (3) et délimitée par une paroi intérieure de cylindre et le piston (2) ;
- un canal d'admission (7) qui débouche dans la chambre de cylindre (4) par l'intermédiaire d'au moins une soupape d'admission (5) ;
- un canal d'échappement (8) qui débouche dans la chambre de cylindre (4) par l'intermédiaire d'au moins une soupape d'échappement (6) ;
- au moins un dispositif d'étranglement commandable (11) disposé dans le canal d'admission (7) ; et
- un appareil de commande (12) pour commander et/ou réguler la machine à piston,
- des moyens pour détecter une vitesse de rotation (5) ;
- des moyens pour commander le dispositif d'étranglement (11) ; et
- des moyens (13a ; 13b) pour détecter la pression dans le canal d'admission (7) lorsque la soupape d'admission (5) est ouverte et le dispositif d'étranglement (11) est fermé,
**caractérisé en ce que**
lors de la détection d'un mouvement de rotation de la machine à piston, de commande (12) initie une fermeture du dispositif d'étranglement (11), saisit la pression (Pein) dans le canal d'admission (7) après une durée de mesure prédéfinie, compare la pression détectée avec une valeur de seuil (SW) prédéfinie et détermine le sens de rotation de la machine à piston à l'aide du résultat de la comparaison.

6. Dispositif selon la revendication 5,
**caractérisé par**
des moyens (19) pour saisir la pression dans le canal d'échappement (8).

7. Dispositif selon la revendication 5,
**caractérisé par**
des moyens pour modéliser la contre-pression des gaz d'échappement et des moyens pour saisir la pression ambiante.

8. Dispositif selon la revendication 5,
**caractérisé en ce que**
l'appareil de commande (12) présente des moyens (20) pour mémoriser une pression maximale (Pmax) spécifique pour la machine à piston.

9. Dispositif selon l'une quelconque des revendications 5 à 8,
**caractérisé en ce que**
les moyens de détection de pression dans le canal d'admission (7) comprennent un manostat numérique (13b) qui déclenche un processus de commutation lorsque la pression passe au-dessus ou en dessous de la valeur de seuil (SW).

10. Appareil de commande (12) pour commander et/ou réguler une machine à piston comprenant :
- au moins un cylindre (3) ;
- un piston (2) guidé dans un mouvement de va-et-vient dans le cylindre (3) ;
- une chambre de cylindre (4) formée à l'intérieur du cylindre (3) et délimitée par une paroi intérieure de cylindre et le piston (2) ;
- un canal d'admission (7) qui débouche dans la chambre de cylindre (4) par l'intermédiaire d'au moins une soupape d'admission (5) ;
- un canal d'échappement (8) qui débouche dans la chambre de cylindre (4) par l'intermédiaire d'au moins une soupape d'échappement (6) ; et
- au moins un dispositif d'étranglement commandable (11) disposé dans le canal d'admission (7), l'appareil de commande (12)
- détectant un mouvement de rotation de la machine à piston ; et
- commandant la position du dispositif d'étranglement (11),
**caractérisé en ce que**
lors de la détection d'un mouvement de rotation de la machine à piston, l'appareil de commande (12) initie une fermeture du dispositif d'étranglement (11), saisit la pression dans le canal d'admission (7) après une durée de mesure prédéfinie, compare celle-ci avec une valeur de seuil (SW) prédéfinie et détermine le sens de rotation de la machine à piston à l'aide de la comparaison.

11. Programme informatique exécutable sur un ordinateur (21), en particulier un microprocesseur,
**caractérisé en ce que**
le programme informatique réalise un procédé selon l'une quelconque des revendications 1 à 4 lorsqu'il est exécuté sur l'ordinateur (21).

12. Programme informatique selon la revendication 11,
**caractérisé en ce que**
le programme informatique est mémorisé sur un élément de mémoire (20), en particulier une mémoire vive, une mémoire morte ou une mémoire flash.
